(19) Europäisches Patentamt
European Patent Office
Office européen des brevets

(11) **EP 0 686 570 B1**

(12) **EUROPEAN PATENT SPECIFICATION**

(45) Date of publication and mention
of the grant of the patent:
**14.04.1999 Bulletin 1999/15**

(51) Int. Cl.$^6$: **B65D 65/38**, G03C 3/00,
D21H 11/14

(21) Application number: **95108912.7**

(22) Date of filing: **09.06.1995**

(54) **Packing material for pre-sensitized plates and package**

Verpackungsmaterial und Verpackung für vorsensibilisierte Druckplatten

Matériau d'emballage et emballage pour plaques présensibilisées

(84) Designated Contracting States:
**DE NL**

(30) Priority: **10.06.1994 JP 129376/94**

(43) Date of publication of application:
**13.12.1995 Bulletin 1995/50**

(73) Proprietor:
**FUJI PHOTO FILM CO., LTD.
Kanagawa-ken (JP)**

(72) Inventors:
• **Sumimoto, Hideji,
c/o Fuji Photo Film Co., Ltd.
Haibara-gun, Shizuoka (JP)**
• **Nagashima, Akira,
c/o Fuji Photo Film Co., Ltd.
Haibara-gun, Shizuoka (JP)**

(74) Representative:
**Grünecker, Kinkeldey,
Stockmair & Schwanhäusser
Anwaltssozietät
Maximilianstrasse 58
80538 München (DE)**

(56) References cited:
**EP-A- 0 362 823          EP-A- 0 436 133**

• **PATENT ABSTRACTS OF JAPAN vol. 18, no. 349
(P-1763), 30 June 1994 & JP-A-92 239382
(MITSUBISHI PAPER MILLS), 29 March 1994,**
• **PATENT ABSTRACTS OF JAPAN vol. 15, no. 172
(P-1197), 30 April 1991 & JP-A-89 171494
(KONICA), 18 February 1991,**
• **PATENT ABSTRACTS OF JAPAN vol. 14, no. 227
(C-0718), 15 May 1990 & JP-A-88 198859 (FUJI
PHOTO FILM), 22 February 1990,**
• **PATENT ABSTRACTS OF JAPAN vol. 18, no. 48
(P-1682), 25 January 1994 & JP-A-92 067529
(MITSUBISHI PAPER MILLS), 22 October 1993,**

**Description**

BACKGROUND OF THE INVENTION

This invention relates to a packing material for pre-sensitized plates and a package of pre-sensitized plates using the packing material as pad board.

In general, pre-sensitized plate is composed of a support, such as an aluminum plate on which a light sensitive resin layer is formed. When the pre-sensitized plate is packed, a plurality of the pre-sensitize plates are stacked with interposing an interleaving paper between respective pre-sensitized plates in order to protect the light-sensitive resin layer. A pair of pad boards are laid on the top and under the bottom of the stack as a cushioning material for absorbing external force, and then, the stack is wrapped by a light-shielding paper to complete the package.

Heretofore, the pad boards is manufactured using chemical pulp, groudwood pulp, waste paper or the like as a raw material. An improvement of the pad board was proposed that the water content is made less than a prescribed value in order to prevent degradation of visual imaging ability by exposure of pre-sensitized printing plates (Japanese Patent KOKAI 3-36545).

A proposed interleaving paper for photographic material in Japanese Patent KOKAI 2-53999 is made of unbleached kraft pulp as the principal component, and has a pH measured by hot water extracting method of 5 to 9, so as not to affect adversely photographic properties.

However, even though pre-sensitized plates have good print-out ability, when they are packed using a material produced from waste paper as the pad board the print-out ability of pre-sensitized plates neighboring the pad board is degraded by storing for several months. The print-out ability in the specification is definitioned as a contrast ($\Delta$ D) between an exposed portion and an unexposed portion of a pre-sensitized plate.

SUMMARY OF THE INVENTION

An object of this invention is to provide a packing material for pre-sensitized printing plates produced from waste paper which does not degrade print-out ability of the pre-sensitized printing plates and a package using the packing material.

The present inventors have investigated as to the cause of the degradation of print-out ability by the pad board produced from waste paper, and found that the degradation of print-out ability is caused by ammonia gas. Then, they have further investigated and confirmed a means for not evolving ammonia gas.

Thus, the present invention provides a packing material for pre-sensitized plates, which is produced from waste paper, and which has a pH of 7.0 or less, and packing material for pre-sensitized plates produced from waste paper which does not degrade print-out ability of the pre-sensitized plates.

BRIEF DESCRIPTION OF DRAWING

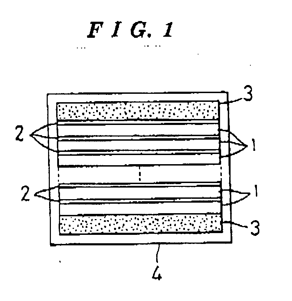

Figure 1 is a sectional view of a package of pre-sensitized plates embodying the invention.

1    Pre-sensitized plate
2    Interleaving paper
3    Pad board
4    Light-shielding paper

DETAILED DESCRIPTION OF THE INVENTION

The pH of the packing material is 7.0 or less, preferably 6.0 or less, more preferably 5.0 or less. In general, the pH of paper boards produced from waste paper is 8.0 or more. Waste paper contains polyacrylamide as a paper reinforcing agent, draining agentor the like, and as a result, the paper board produced from waste paper contains polyacrylamide, as a maximum value of 1 weight %. The polyacrylamide decomposes under alkaline conditions to produce ammonia gas, and the ammonia gas neutralizes acids produced in a light-sensitive resin layer upon being exposed. Accordingly, acids necessary for discoloring dyes are thereby consumed resulting in the degradation of print-out ability. In this invention, the pH of the packing material produced from waste paper is rendered 7.0 or less to prevent the evolution of ammonia gas, resulting in the prevention of the degradation of printing out ability. In a high temperature period at 30°C or higher such as in summer and in a high temperature region such as in the tropics, since the generation rate of ammonia gas from polyacrylamide increases, it is preferable to render the pH 5.0 or less. On the other hand, the pH is preferably 4.0 or more.

As acidic material for adjusting the pH, varioius inorganic or organic acids, such as sulfuric acid, phosphoric acid, phosphorous acid, malic acid, and salts being an aqueous solution acidic, such as aluminum sulfate and copper sulfate, are usable. Preferable acidic materials are aluminum sulfate.

The pH of the packing material can be adjusted by adding an acidic material, such as an acid or aluminum sulfate, in a paper-making process, applying an acidic material, such as an acid, to the surface of the packing material, such as pad board.

The waste paper used as a raw material of the packing material is not limited, and includes newspapers, magazines, advertising papers, corrugated boards, etc.

As the pre-sensitized printing plates, there are negative type plate, positive type plate, etc.

The packing material for pre-sensitized printing plates are materials used for packing the pre-sensitized plates for transportation, storing, etc. of them, and includes pad boarddinterleaving paper, light-shielding paper, outer packaging box, etc. The packing material contains waste paper, in general, in an amount of 50 % or more, particularly 90 % or more. When the pulp of the packing material contains other than that of waste paper, the remaining pulp may be conventional.

The thickness of the packing material is generally, in the case of pad carton, from 0.3 to 2.0 mm, particularly from 0.5 to 1.5 mm in the case of interleaving paper, from 30 to 100 $\mu$m, particularly from 50 to 85 $\mu$m.

A package of pre-sensitized printing plate comprises a stack wherein pre sensitized plate and interleaving paper are stacked alternately, a pair of pad cartons produced from waste paper laid on the top and under the bottom of the stack and a light-shielding paper wrapping them. In the package, the packing material of this invention can be used as the pad boards and the interleaving papers.

EXAMPLES

Examples 1, 2, Comparative Examples 1-3

Packages of pre-sensitized plates as shown in Figure 1 were prepared. The pre-sensitized plates 1 were "Positive Plate FPQ-J (Fuji Photo Film Co., Ltd.), and 30 sheets of the pre-sensitized plates 1 were stacked intervening an interleaving paper 2 made of wood pulp and synthetic pulp having a thickness of 50 $\mu$m. Each one sheet of pad board 3 having a thickness of 900 $\mu$m was laid on the top and under the bottom of the stack, and the stack was wrapped by a light-shielding paper 4 composed of a liner paper, a polyethylene film and an aluminum foil.

The pad boards used in each example are shown in Table 1. The pH of the pad board in Examples 1 and 2 were adjusted by controlling the adding amount of aluminum sulfate in the paper-making process.

Each package of pre-sensitized plates was stored in a thermostatic chamber at 45°C at 75 % RH for 2 weeks, and print-out test was conducted as to the first pre-sensitized plate adjacent to each pad board. The results are shown in Table 1.

[Tabel 1]

| Example | Pad Carton | | | Print-out Ability [$\Delta D_{Visual}$] |
|---------|------------|--|--|------------------|
| | Raw Material | Water Content | pH (25 °C) | |
| Example 1 | Waste Paper | 6.9 % | 5.69 | 0.08 A |
| Example 2 | Waste Paper | 7.5 % | 5.14 | 0.08 A 0.01 |
| Comparative 1 | Waste Paper | 5.7 % | 8.49 | C 0.01 |
| Comparative 2 | Waste Paper | 6.2 % | 8.01 | C 0.08 |
| Comparative 3 | Virgin Pulp | 6.8 % | 6.53 | A |

PH Measurement

1 g of sample was cut into small pieces, and put in 70 g of distilled water. After sturing 3 hours, the pH was measured by a glass electrode at 25°C.

Print-out Ability

Exposure Conditions:

Exposing Apparatus; Metal halide lamp Al Dolphin (Al Graphic Service Co., Ltd.)
Distance: 90 cm
Quantity of Exposure: 42 counts

Density Measurement:

Densitometer: "Macbeth RD 918" (Kollmorgen Corp.) with a visual color filter

Visual Evaluation:

A : Excellent (After exposure, image can ba seen clearly.)
C : Bad (After exposure, image cannot be seen.)

Examples 3,4, Conventional example 4

An aqueous solution of 20 % acid was applied on both surfaces of a paper board produced from waster paper. The paper board was dried maturally, and used as the pad board. The acids used are shown in Table 2.
The other packing conditions are the same as Example 1.
The results are shown in Table 2.

[Table 2]

| Example | Pad Carton | | | Print-out Ability [$\Delta D_{Visual}$] |
|---|---|---|---|---|
| | Acid Coating | Water Content | pH (25 °C) | |
| Example 3 | Phosphorous Acid | 10.6 % | 5.57 | 0.08 A |
| Example 4 | Phosphoric Acid | 10.6 % | 6.02 | 0.08 A |
| Comparative 4 | None | 7.3 % | 8.43 | 0.02 C |

Testing methods are the same as Example 1. As shown in Tables 1 and 2, this invention surprising by improves the print-out ability in package of pre-sensitized plates. As many apparently widely different embodimentsof this invention may be made without departing from the spirit andscope thereof, it is to be understood that the invention is not limited to the specific embodiments thereof except as denfinedin the appended claims.

## Claims

1. A packing material for pre-sensitized printing plates, which is produced from waste paper, and which has a pH of 7.0 or less.

2. The packaging material of claim 1 which contains polyacrylamide.

3. The packaging material of claim 1 which has a pH of from 7.0 to 4.0.

4. The packaging material of claim 1 of which the pH has been adjusted by sulfuric acid, phosphoric acid, phosphorous acid, or Malic acid.

5. The packaging material of claim 1 of which the pH has been adjusted by aluminum sulfate.

6. The packaging material of claim 1 which is pad carton or interleaving paper.

7. A package of pre-sensitized plate which comprises a stack wherein pre-sensitized plate and interleaving paper are stacked alternately, a pair of pad board laid on the top and under the bottom of the stack and a light-shielding paper wrapping the stack with the pad boards, wherein the pad boards are produced from waster paper and have a pH of 7.0 or less.

8. The package of claim 7, wherein the interleaving papers are produced from waster paper and have a pH of 7.0 or less.

## Patentansprüche

1. Verpackungsmaterial für vorsensibilisierte Druckplatten, welches aus Altpapier hergestellt wurde und welches einen pH-Wert von 7,0 oder weniger aufweist.

2. Verpackungsmaterial nach Anspruch 1, das Polyacrylamid enthält.

3. Verpackungsmaterial nach Anspruch 1, welches einen pH-Wert von 7,0 bis 4,0 aufweist.

4. Verpackungsmaterial nach Anspruch 1, dessen pH-Wert mit Schwefelsäure, Phosphorsäure, phosphoriger Säure oder Äpfelsäure eingestellt worden ist.

5. Verpackungsmaterial nach Anspruch 1, dessen pH-Wert mit Aluminiumsulfat eingestellt worden ist.

6. Verpackungsmaterial nach Anspruch 1, welches Polsterkarton oder ein Zwischenschicht-Papier ist.

7. Packung von vorsensibilisierten Platten, umfassend einen Stapel, worin vorsensibilisierte Platten und Zwischenschicht-Papier alternierend gestapelt sind, ein Paar Polsterpappen, die auf dem Stapel und unter dem Boden des Stapels angeordnet sind, und ein lichtabschirmendes Papier, das den Stapel mit den gepolsterten Pappen umhüllt, worin die Polsterpappen aus Altpapier hergestellt wurden und einen pH-Wert von 7,0 oder weniger aufweisen.

8. Packung nach Anspruch 7, worin die Zwischenschicht-Papiere aus Altpapier hergestellt wurden und einen pH-Wert von 7,0 oder weniger aufweisen.

## Revendications

1. Matériau d'emballage pour plaques d'impression présensibilisées, qui est produit à partir de papier de rebut et qui a un pH de 7,0 ou moins.

2. Matériau d'emballage selon la revendication 1 qui contient du polyacrylamide.

3. Matériau d'emballage selon la revendication 1 qui a un pH de 7,0 à 4,0.

4. Matériau d'emballage selon la revendication 1 dont le pH a été ajusté par l'acide sulfurique, l'acide phosphorique, l'acide phosphoreux ou l'acide malique.

5. Matériau d'emballage selon la revendication 1 dont le pH a été ajusté par le sulfate d'aluminium.

6. Matériau d'emballage selon la revendication 1 qui est du carton matelassé ou du papier intercalaire.

7. Emballage de plaque présensibilisée qui comprend un empilement dans lequel la plaque présensibilisée et du papier intercalaire sont empilés tour à tour, une paire de cartons matelassés disposés sur le dessus et sous le fond de l'empilement et un papier formant écran à la lumière enveloppant l'empilement avec les cartons matelassés, où les cartons matelassés sont produits à partir de papier de rebut et ont un pH de 7,0 ou moins.

8. Emballage selon la revendication 7, dans lequel les papiers intercalaires sont produits à partir de papier de rebut et ont un pH de 7,0 ou moins.

*F I G. 1*